# EUROPÄISCHE PATENTSCHRIFT

(11) **EP 2 805 982 B1**
(45) Veröffentlichungstag und Bekanntmachung des Hinweises auf die Patenterteilung: **26.12.2018**
(21) Anmeldenummer: 14167363.2
(22) Anmeldetag: 07.05.2014
(51) Int. Cl.: C08G 59/02, C08G 59/22, C08L 63/00

(54) **Polybutadien mit Epoxygruppen**
Polybutadiene with epoxy groups
Polybutadiène avec groupes époxy

(30) Priorität: 24.05.2013 EP 13169194
(43) Veröffentlichungstag der Anmeldung: 26.11.2014
(73) Patentinhaber: Evonik Degussa GmbH, 45128 Essen (DE)
(72) Erfinder: Haberkorn, Niko, 46282 Dorsten (DE); Berlineanu, Andreas, 45772 Marl (DE); Denkinger, Peter, 48301 Nottuln (DE); Beierlein, Christine, 44795 Bochum (DE)

(56) Entgegenhaltungen:
- EP-A1- 0 845 486
- EP-A2- 1 323 739
- DE-A1- 2 911 243
- DATABASE CAPLUS [Online] CHEMICAL ABSTRACTS SERVICE, COLUMBUS, OHIO, US; 15. November 2010 (2010-11-15), HUANG, WEIJIN ET AL: "Single-component underfill surface mount adhesive with good repair performance and its preparation method", XP002718827, gefunden im STN Database accession no. 2010:1416516 -& CN 101 880 514 A (SHENZHEN CITY COOTECK ELECTRONIC MATERIAL TECHNOLOGY CO LTD) 10. November 2010 (2010-11-10)
- "Handbook of thermoset resins: CHAPTER 3: Epoxy Resins", INTERNET CITATION, 2009, Seiten 155-174, XP009175570, ISBN: 9781847354105 Gefunden im Internet: URL:http://info.smithersrapra.com/download s/chapters/Thermoset%20Resins.pdf [gefunden am 2014-01-16]

## Beschreibung

Die vorliegende Erfindung betrifft die Verwendung eines Polybutadiens mit Epoxygruppen in einer härtbaren Zusammensetzung umfassend wenigstens ein Epoxidharz und wenigstens einen Härter,
wobei das Polybutadien die aus 1,3-Butadien abgeleiteten Monomereinheiten 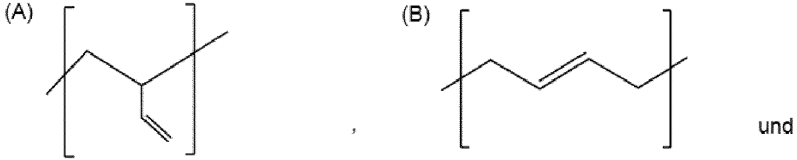 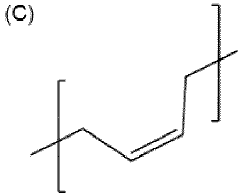 umfasst.
wobei der Anteil von A an der Gesamtheit der im Polybutadien enthaltenen aus 1,3-Butadien abgeleiteten Monomereinheiten 10 bis 60 Mol-% beträgt,
und wobei die Summe der Anteile von B und C an der Gesamtheit der im Polybutadien enthaltenen aus 1,3-Butadien abgeleiteten Monomereinheiten 40 bis 90 Mol-% beträgt. und wobei die Epoxygruppen die Formel (I) 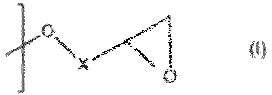 aufweisen und X eine lineare oder verzweigte Alkylengruppe darstellt.

Polybutadiene stellen eine Klasse industriell hoch relevanter organischer Verbindungen dar, die durch Polymerisation von aus dem Cracken von Erdöl in großen Mengen erhältlichem 1,3-Butadien hergestellt werden. Sie sind interessante und wichtige Ausgangsstoffe für chemische Synthesen gleichermaßen im Labor- und Großmaßstab.

Die Polymerisation von 1,3-Butadien zu Polybutadien ist über im Stand der Technik beschriebene Verfahren, die eine anionische Polymerisation umfassen, leicht zu bewerkstelligen. Für viele Anwendungen können die entstehenden Polybutadiene jedoch nicht direkt verwendet werden, sondern sie müssen zunächst einer Modifizierung unterzogen werden.

Als eine solche Modifizierung bietet sich insbesondere die Epoxidierung mittels Reagenzien wie Epichlorhydrin an. Epoxidgruppen können für vielfältige weitere Reaktionen, insbesondere mit Anhydriden oder Aminen, genutzt werden. Das entstehende Polybutadien mit Epoxygruppen kann somit mit Reagenzien wie Diaminen unter Bildung eines widerstandsfähigen Kunststoffes umgesetzt werden.

Shell Oil Company, Research Disclosure, Vol. 416, 12, 1998, Seite 1594, beschreibt die Darstellung von Butadien-Polymeren mit Epoxygruppen. Die Polydiendiole wurden über anionische Polymerisation erhalten. Man erwähnt die schlechte Verträglichkeit der Produkte und deren niedrige Funktionalität von 1,1 bzw. 1,6 und 2. Zur Verbesserung der Verträglichkeit wird die Umsetzung der Glycidether mit EPICURE 3140 Polyamid beschrieben.

Die Erfindung SU195104 (Kautschukinstitut Lebedev) beschreibt die Synthese eines anionischen Polybutadienpolymerisates zu einem "lebendem Polymer" mit Metallatomen der I-III-Gruppe und deren Behandlung mit Epichlorhydrin, Säuren und Basen. Das "lebende Polymer" wird vor der Umsetzung mit Epichlorhydrin nicht isoliert und von Butadienoligomeren befreit. Die Produkte werden mit Maleinsäureanhydrid und Phthalsäureanhydrid umgesetzt.

Die im Stand der Technik beschriebenen Verfahren zur Herstellung von Polybutadien mit Epoxygruppen weisen jedoch den Nachteil auf, dass das Polybutadien schwer zu verarbeiten ist und dass es hohe Viskositäten und hohe Glasübergangstemperaturen aufweist. Weiterhin weisen die Produkte im Stand der Technik beschriebenen Verfahren zur Herstellung von Polybutadien mit Epoxygruppen eine schlechte Verträglichkeit mit anderen Komponenten von Beschichtungsmitteln auf, insbesondere Epoxidharzen.

Ein weiteres Problem von im Stand der Technik beschriebenen härtbaren Zusammensetzungen umfassend ein Epoxidharz und einen Härter, bevorzugt einen aminhaltigen Härter, betrifft die Materialeigenschaften der im ausgehärteten Zustand häufig mechanisch stark beanspruchten Zusammensetzung, insbesondere die in vielen Fällen unzureichende Schlagzähigkeit der ausgehärteten Zusammensetzungen.

Vor diesem Hintergrund besteht die der Erfindung zu Grunde liegende Aufgabe darin, härtbare Zusammensetzungen bereitzustellen.

Diese und weitere Aufgaben werden durch den Gegenstand der vorliegenden Anmeldung und insbesondere auch durch den Gegenstand der beigefügten unabhängigen Ansprüche gelöst, wobei sich Ausführungsformen aus den Unteransprüchen ergeben.

Das der vorliegenden Erfindung zu Grunde liegende Problem wird in einem ersten Aspekt gelöst durch eine Verwendung von Polybutadien mit Epoxygruppen in einer härtbaren Zusammensetzung umfassend wenigstens ein Epoxidharz und wenigstens einen Härter,
wobei das Polybutadien die aus 1,3-Butadien abgeleiteten Monomereinheiten 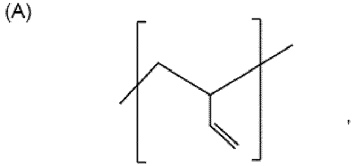 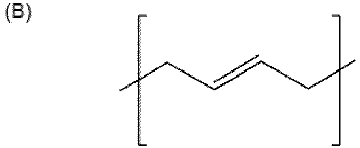 und 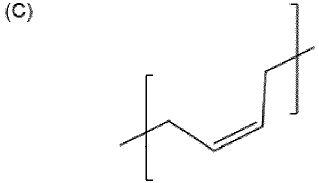 umfasst,
wobei der Anteil von A an der Gesamtheit der im Polybutadien enthaltenen aus 1,3-Butadien abgeleiteten Monomereinheiten 10 bis 60 Mol-% beträgt,
und wobei die Summe der Anteile von B und C an der Gesamtheit der im Polybutadien enthaltenen aus 1,3-Butadien abgeleiteten Monomereinheiten 40 bis 90 Mol-% beträgt.

Das Problem wird in einer bevorzugten Ausführungsform des ersten Aspekts durch eine Verwendung gelöst, wobei der Anteil von A, B und C an der Gesamtheit der im Polybutadien enthaltenen aus 1,3-Butadien abgeleiteten Monomereinheiten jeweils und unabhängig voneinander wenigstens 10 % beträgt.

Das Problem wird in einer bevorzugten Ausführungsform des ersten Aspekts durch eine Verwendung gelöst, wobei der Anteil von A an der Gesamtheit der im Polybutadien enthaltenen aus 1,3-Butadien abgeleiteten Monomereinheiten 15 bis 30, der Anteil von B an der Gesamtheit der im Polybutadien enthaltenen aus 1,3-Butadien abgeleiteten Monomereinheiten 50 bis 70 und der Anteil von C an der Gesamtheit der im Polybutadien enthaltenen aus 1,3-Butadien abgeleiteten Monomereinheiten 15 bis 30 Mol-% beträgt.

Das Problem wird in einer bevorzugten Ausführungsform des ersten Aspekts durch eine Verwendung gelöst, wobei die Epoxygruppen die Formel (I) 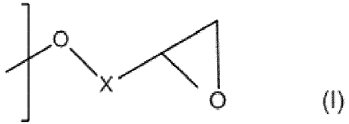 aufweisen und X eine lineare oder verzweigte Alkylengruppe darstellt, bevorzugt eine lineare Alkylengruppe der Formel -(CH₂)ₓ-, wobei x 1 bis 4, noch bevorzugter 1 ist.

Das Problem wird in einer weiteren bevorzugten Ausführungsform des ersten Aspekts durch eine Verwendung gelöst, wobei das Polybutadien 1,5 bis 3, bevorzugt 1,75 bis 2,5 Epoxygruppen aufweist.

Das Problem wird in einer weiteren bevorzugten Ausführungsform des ersten Aspekts durch eine Verwendung gelöst, wobei es sich bei der härtbaren Zusammensetzung um eine härtbare Zusammensetzung in Kleb-, Dicht- und Akustikmassen für Automobilanwendungen, in Gießharzformulierungen für Elektroisolation, in Dichtmassen für Baustoffe oder zur Imprägnierung oder Verklebung von Metall, Glas- und Kohlefasergewebe handelt.

Das Problem wird in einer weiteren bevorzugten Ausführungsform des ersten Aspekts durch eine Verwendung gelöst, wobei das Epoxidharz aus der Gruppe umfassend Epoxidharze auf der Basis von Bisphenol-A-diglycidylether, Bisphenol-F-diglycidylether, kettenverlängerte Bisphenol-A-Harze mit Molmassen von 700 bis 5000, epoxidierte Novolake, Triglycidyl-p-aminophenol, Tetraglycidyl-methylendianilin und Hexahydrophthalsäure-diglycidylester und cycloaliphatische Typen ausgewählt ist.

Das Problem wird in einer weiteren bevorzugten Ausführungsform des ersten Aspekts durch eine Verwendung gelöst, wobei es sich bei dem wenigstens einen Härter um einen Härter handelt, der aus der Gruppe ausgewählt ist, die aminhaltige Härter mit mindestens zwei oder mehr primären und/oder sekundären Aminogruppen oder Di- und Polycarbonsäureanhydride umfasst.

Das Problem wird in einer weiteren bevorzugten Ausführungsform des ersten Aspekts durch eine Verwendung gelöst, wobei der Härter aus der Gruppe ausgewählt ist, die substituierte Harnstoffe, Guanamine, Guanidine und Imidazole umfasst.

Das Problem wird in einer weiteren bevorzugten Ausführungsform des ersten Aspekts durch eine Verwendung gelöst, wobei es sich bei dem Härter um Dicyandiamid handelt.

Das Problem wird in einer weiteren bevorzugten Ausführungsform des ersten Aspekts durch eine Verwendung gelöst, wobei es sich bei dem wenigstens einen Härter um ein Polyamin handelt.

Das Problem wird in einer weiteren bevorzugten Ausführungsform des ersten Aspekts durch eine Verwendung gelöst, wobei die härtbare Zusammensetzung wenigstens eine weitere Verbindung aus der Gruppe umfassend Lösungsmittel, Reaktionsbeschleuniger, Pigmente, Füllstoffe, Additive, Reaktivverdünner und Modifizierungsmittel umfasst.

Bei dem erfindungsgemäß eingesetzten Polybutadien handelt es sich um ein Polybutadien mit Epoxygruppen, wobei das Polybutadien die aus 1,3-Butadien abgeleiteten Monomereinheiten 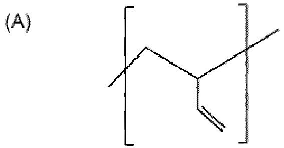 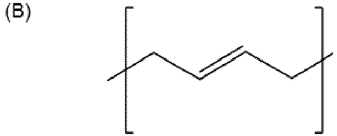 und 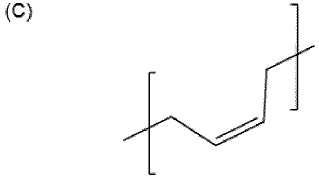 umfasst,
wobei der Anteil von A an der im Polybutadien enthaltenen aus 1,3-Butadien abgeleiteten Gesamtheit der Monomereinheiten 10 bis 60 Mol-% beträgt,
und wobei die Summe der Anteile von B und C an der Gesamtheit der im Polybutadien enthaltenen aus 1,3-Butadien abgeleiteten Monomereinheiten 40 bis 90 Mol-% beträgt.

Der Anteil von A, B und C an der Gesamtheit der im Polybutadien enthaltenen aus 1,3-Butadien abgeleiteten Monomereinheiten beträgt vorzugsweise jeweils und unabhängig voneinander wenigstens 10 Mol-%.

Der Anteil von A an der Gesamtheit der im Polybutadien enthaltenen aus 1,3-Butadien abgeleiteten Monomereinheiten beträgt vorzugsweise 15 bis 30 Mol-%, der Anteil von B an der Gesamtheit der im Polybutadien enthaltenen aus 1,3-Butadien abgeleiteten Monomereinheiten vorzugsweise 50 bis 70 Mol-% und der Anteil von C an der Gesamtheit der im Polybutadien enthaltenen aus 1,3-Butadien abgeleiteten Monomereinheiten vorzugsweise 15 bis 30 Mol-%.

In einer bevorzugten Ausführungsform können neben den im Polybutadien enthaltenen aus 1,3-Butadien abgeleiteten Monomereinheiten A), B) und C) auch noch andere Monomereinheiten enthalten sein, insbesondere solche, die nicht aus 1,3-Butadien abgeleitet sind. In einer bevorzugtesten Ausführungsform stellt die Gesamtheit der im Polybutadien enthaltenen aus 1,3-Butadien abgeleiteten Monomereinheiten A), B) und C) jedoch einen Anteil an der Gesamtheit der in dem Polymer eingebauten Monomereinheiten, umfassend die aus 1,3-Butadien abgeleiteten und andere, von wenigstens 80, bevorzugt 90, noch bevorzugter 95, am bevorzugtesten 100 Mol-% dar.

Die Epoxygruppen des Polybutadiens mit Epoxygruppen weisen insbesondere die Formel (I) 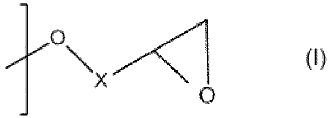 auf, worin X eine lineare oder verzweigte Alkylengruppe darstellt, bevorzugt eine lineare Alkylengruppe der Formel -(CH₂)ₓ-, wobei x 1 bis 4, noch bevorzugter 1 ist.

Das erfindungsgemäß eingesetzte Polybutadien mit Epoxygruppen weist in einer bevorzugten Ausführungsform eine mittlere Funktionalität von 1,5 bis 3, bevorzugt 1,75 bis 2,5 auf. Dies bedeutet in einer noch bevorzugten Ausführungsform, dass ein Polybutadienmolekül unabhängig von seiner Länge durchschnittlich 1,5 bis 3, bevorzugt 1,75 bis 2,5 Epoxygruppen aufweist.

Das erfindungsgemäß eingesetzte Polybutadien mit Epoxygruppen ist nahezu farblos und weist eine niedrige Viskosität auf. Die Viskosität wird bevorzugt bei 20 °C mit dem Rotationsviskosimeter der Firma Haake ermittelt.

Bevorzugt erfolgt die Bereitstellung des erfindungsgemäß verwendeten Polybutadiens durch ein Verfahren umfassend als Schritt a) das Bereitstellen eines mittels radikalischer Polymerisation hergestellten Polybutadiens mit Hydroxygruppen. Ein derartiges Polybutadien mit Hydroxygruppen kann beispielsweise durch Polymerisation von 1,3-Butadien in Anwesenheit von Wasserstoffperoxid, Wasser und einem organischen Lösungsmittel hergestellt werden, wie es in der EP12169794.0 beschrieben ist. In einer bevorzugten Ausführungsform wird unter dem Begriff "Polybutadien", wie hierin verwendet, ein durch Polymerisation von Monomereinheiten mit jeweils wenigstens zwei konjugierten Doppelbindungen erhaltenes Produkt verstanden, wobei es sich in Reihenfolge zunehmender Bevorzugung bei wenigstens 80, 85, 90, 95, 98, 99 oder 99,9 % der Monomereinheiten um 1,3-Butadien handelt.

Das erfindungsgemäß eingesetzte Polybutadien mit Epoxygruppen wird insbesondere durch ein Verfahren hergestellt, umfassend die Schritte
a) Bereitstellen eines mittels radikalischer Polymerisation hergestellten Polybutadiens mit Hydroxygruppen,
b) Umsetzen des Polybutadiens mit Hydroxygruppen aus Schritt a) mit einer Monoepoxyverbindung in einer Reaktionsmischung,
   wobei das Molverhältnis zwischen endständigen Hydroxygruppen und der Monoepoxyverbindung 10 : 1 bis 1 : 10 beträgt,
   wobei die Temperatur 0 bis 150 °C beträgt,
   und wobei die Reaktionszeit 0,5 bis 24 Stunden beträgt.
c) Zugeben eines Alkalimetallhydroxids, Alkalimetallhydrogencarbonats oder Alkalimetallcarbonats zur Reaktionsmischung aus Schritt b),
   wobei das Polybutadien mit endständigen Hydroxygruppen die aus 1,3-Butadien abgeleiteten Monomereinheiten 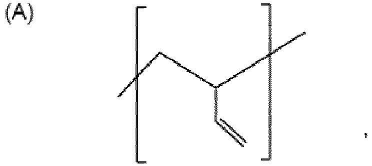 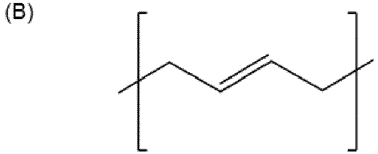 und 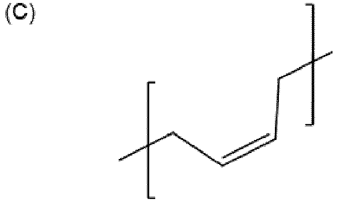 umfasst,
   wobei der Anteil von A an der Gesamtheit der im Polybutadien enthaltenen aus 1,3-Butadien abgeleiteten Monomereinheiten 10 bis 60 Mol-% beträgt,
   und wobei die Summe der Anteile von B und C an der Gesamtheit der im Polybutadien enthaltenen aus 1,3-Butadien abgeleiteten Monomereinheiten 40 bis 90 Mol-% beträgt
   wobei bevorzugt der Anteil von A, B und C an der Gesamtheit der im Polybutadien enthaltenen aus 1,3-Butadien abgeleiteten Monomereinheiten jeweils und unabhängig voneinander wenigstens 10 % beträgt,
   wobei noch bevorzugter der Anteil von A an der Gesamtheit der im Polybutadien enthaltenen aus 1,3-Butadien abgeleiteten Monomereinheiten 15 bis 30, der Anteil von B an der Gesamtheit der im Polybutadien enthaltenen aus 1,3-Butadien abgeleiteten Monomereinheiten 50 bis 70 und der Anteil von C an der Gesamtheit der im Polybutadien enthaltenen aus 1,3-Butadien abgeleiteten Monomereinheiten 15 bis 30 Mol-% beträgt.

In Schritt b) des Verfahrens wird das Polybutadien mit Hydroxygruppen mit einer Monoepoxyverbindung in Anwesenheit von Inertgas umgesetzt. Die Monoepoxyverbindung ist vorzugsweise ausgewählt aus der Gruppe umfassend Epihalohydrine, bevorzugt Epichlorhydrin, β-Methylepichlorhydrin oder Epibromhydrin, und Alkylenoxide, bevorzugt Ethylenoxid, 1,2-Propylenoxid oder 1,2-Butylenoxid. Bevorzugt wird Epichlorhydrin in einer Menge zwischen 0,5 und 2 Mol Epichlorhydrin pro Äquivalent an einem Polybutadien gebundener Hydroxygruppe eingesetzt. Besonders bevorzugt wird 0,9 bis 1,2 Mol Epichlorhydrin pro Äquivalent an einem Polybutadien gebundener Hydroxygruppe eingesetzt.

Das Molverhältnis zwischen der Monoepoxyverbindung und den endständigen Hydroxygruppen beträgt in der Reaktionsmischung in Schritt b) 0,5 bis 2, bevorzugt 0,9 bis 1,2.

In einer bevorzugten Ausführungsform läuft Schritt b) in einem Lösungsmittel ab. In einer bevorzugten Ausführungsform handelt es sich bei dem Lösungsmittel um einen bei der Raumtemperatur flüssigen Aliphaten, beispielsweise Hexan, Heptan, Octan, Cyclohexan, um einen bei der Raumtemperatur (25 °C) flüssigen Aromaten, beispielsweise Benzol, Toluol, um einen bei der Raumtemperatur flüssigen Ester, beispielsweise Ethylacetat, Butylacetat, oder um einen bei der Raumtemperatur flüssigen Ether, beispielsweise Diethyl- und Diisopropylether, Dioxan und Tetrahydrofuran. Art und Menge des Lösungsmittels ist abhängig vom eingesetzten Polybutadien mit Hydroxygruppen und der Menge der Monoepoxyverbindung. Lösungsmittelgemische der genannten Lösungsmittel sind in beliebigen Mengenverhältnissen möglich. Der Anteil der Summe von Polybutadien mit Hydroxygruppen und Monoepoxyverbindung im Reaktionsgemisch kann jeweils zwischen 5 und 80 Gew.-% betragen.

Die Reaktion wird bevorzugt in Anwesenheit eines Inertgases bei reduziertem oder erhöhtem Druck durchgeführt. In einer bevorzugten Ausführungsform bedeutet der Begriff "Inertgas", wie hierin verwendet, ein Gas oder Gasgemisch, das in seiner Gesamtheit reaktionsträge ist. Bevorzugt handelt es sich bei dem Inertgas um Stickstoff, Edelgase oder Mischungen davon.

Bevorzugt dauert Schritt b) 0,5 bis 24 Stunden an.

Die Temperatur in Schritt b) beträgt 0 bis 150, bevorzugt 0 bis 70 °C.

Beim Starten der Reaktion in Schritt b) kann sowohl das Polybutadien mit Hydroxygruppen als auch das Monoepoxyverbindung vorgelegt werden. Alternativ können auch beide Verbindungen gemeinsam vorgelegt werden. Danach wird das Reaktionsgemisch durch Aufheizen auf die Reaktionstemperatur gebracht.

Schritt b) läuft bevorzugt in Anwesenheit eines Metall- oder Halbmetallsalzes als Katalysator ab. Dabei handelt es sich um wenigstens ein Metall der Haupt- oder Nebengruppen des Periodensystems , bevorzugt ausgewählt aus der Gruppe umfassen Bor, Aluminium, Zink und Zinn ,und wenigstens ein Anion aus der Gruppe umfassend F⁻, Cl⁻, BF₄⁻, PF₆⁻, AsF₆⁻, SbF₆⁻, ClO₄⁻, IO₄⁻, und NO₃⁻ Die Einsatzmenge des Katalysators beträgt bevorzugt zwischen 0,001 bis 0,5 Mol des Metallsalzes pro Äquivalent an einem Polybutadien gebundener Hydroxygruppe. Es können die Reaktionskomponenten und der Katalysator vorgelegt und dann zur Reaktion gebracht werden. Vorzugsweise wird der Metallsalzkatalysator mit dem Polybutadien mit Hydroxygruppen vorgelegt und danach wird die Monoepoxyverbindung, bevorzugt Epihalohydrin, hinzugegeben.

Bevorzugt wird überschüssige Monoepoxyverbindung nach Schritt b) destillativ entfernt, wobei das Lösungsmittel bevorzugt erst nach dieser Entfernung der überschüssigen Monoepoxyverbindung hinzugegeben wird.

In Schritt c) erfolgt eine Dehydrohalogenierung durch Zugabe wenigstens eines Alkalimetallhydroxids, eines Alkalimetallhydrogencarbonats oder eines Alkalimetallcarbonats als Base zur Bildung des Alkalimetallhalogenids zur Reaktionsmischung aus Schritt b). In einer bevorzugten Ausführungsform beträgt die Menge des zugegebenen Alkalimetallhydroxids zwischen 0,7 bis 1,4 Mol pro Äquivalent an einem Polybutadien gebundener Hydroxygruppe. Die Temperatur in Schritt c) sollte zwischen 0 und 80 °C liegen.

Schritt b) wird vorzugsweise in Anwesenheit eines Lösungsmittels durchgeführt und dieses vor, während oder nach Schritt c), bevorzugt nach Schritt c), von der Reaktionsmischung abgetrennt.

In einem weiteren Aspekt wird das der Erfindung zu Grunde liegende Problem gelöst durch eine Zusammensetzung umfassend das vorab genannte Polybutadien mit Epoxygruppen oder das nach dem vorab genannten Verfahren hergestellte Polybutadien mit Epoxygruppen sowie wenigstens einen Härter, optional zusätzlich wenigstens ein Epoxydharz.

In einem weiteren Aspekt wird das der Erfindung zu Grunde liegende Problem gelöst durch ein Bindemittel in Kleb-, Dicht- und Akustikmassen für Automobilanwendungen, Gießharzformulierungen für Elektroisolation, Dichtmassen für Baustoffe, zur Imprägnierung oder Verklebung von Glas- und Kohlefasergewebe umfassend das vorab genannte Polybutadien mit endständigen Epoxygruppen oder das nach dem vorab beschriebenen Verfahren hergestellte Polybutadien mit endständigen Epoxygruppen und wenigstens einen Härter, optional zusätzlich wenigstens ein Epoxydharz.

In einem weiteren Aspekt wird das der Erfindung zu Grunde liegende Problem gelöst durch die Verwendung des vorab genannten Polybutadiens mit endständigen Epoxygruppen oder des nach dem vorab beschriebenen Verfahren hergestellten Polybutadiens mit endständigen Epoxygruppen als Bindemittel in Kleb-, Dicht- und Akustikmassen für Automobilanwendungen, in Gießharzformulierungen für Elektroisolation, in Dichtmassen für Baustoffe, zur Imprägnierung oder Verklebung von Glas- und Kohlefasergewebe.

In einem weiteren Aspekt wird das der Erfindung zu Grunde liegende Problem gelöst durch ein Verfahren umfassend den Schritt des Aushärtens der erfindungsgemäßen Zusammensetzung.

Die vorliegende Erfindung basiert auf der überraschenden Erkenntnis, dass ausgehend von mittels einer radikalischen Polymerisation erhaltenem Polybutadien hergestelltes Polybutadien mit Epoxygruppen eine geringe Viskosität und Glasübergangstemperatur aufweist. Ohne an eine bestimmte Theorie gebunden sein zu wollen, vermuten die Erfinder der vorliegenden Erfindung, dass die radikalische Polymerisation gegenüber einer anionischen Polymerisation von Butadien zu einem Polybutadien mit einem hohen Gehalt an 1.2-Vinyl als Monomerbaustein am Polymer führt und dass dieses Monomer für die genannten Eigenschaften ursächlich ist.

Die vorliegende Erfindung basiert weiterhin auf der überraschenden Erkenntnis, dass Polybutadien mit endständigen Epoxygruppen als Bestandteil einer härtbaren Mischung mit einem Epoxidharz und einem Härter geeignet sein kann, entweder die Schlagzähigkeit der Zusammensetzung im ausgehärteten Zustand zu erhöhen oder die Flexibilisierung in Epoxyharzen zu erhöhen.

Die vorliegende Erfindung betrifft die Verwendung eines Polybutadiens mit Epoxygruppen in härtbaren Zusammensetzungen. Ein solches Polybutadien kann ausgehend von einem durch radikalische Polymerisation von 1,3-Butadien erzeugten Polybutadien mit Hydroxygruppen und anschließende Umsetzung mit einer Monoepoxyverbindung erhalten werden, jeweils umfassend die im Polybutadien enthaltenen aus 1,3-Butadien abgeleiteten Monomereinheiten A), B) und C), wobei eine eckige Klammer bei der in dieser Anmeldung gewählten formelmäßigen Darstellung der im Polybutadien enthaltenen aus 1,3-Butadien abgeleiteten Monomereinheiten A), B) und C) zeigt, dass die mit der jeweiligen eckigen Klammer versehene Bindung nicht etwa mit einer Methylgruppe endet, sondern dass die entsprechende Monomereinheit über diese Bindung mit einer weiteren Monomereinheit oder einer anderen funktionellen Gruppe, insbesondere einer Hydroxygruppe oder Epoxygruppe, verbunden ist. Die Monomereinheiten A), B) und C) können dabei in beliebiger Reihenfolge im Polymer angeordnet sein. Bevorzugt ist eine statistische Anordnung.

Die Charakterisierung der mechanischen Eigenschaften der erfindungsgemäßen härtbaren Zusammensetzung erfolgt im ausgehärteten Zustand, beispielsweise durch Bestimmung der Zugfestigkeit und Schlagzähigkeit (Charpy) eines Prüfkörpers nach den Prüfnormen DIN 53455 bzw. DIN 53453.

Das erfindungsgemäße Polybutadien mit Epoxygruppen kann erfindungsgemäß in einer Zusammensetzung umfassend das Polybutadien mit Epoxygruppen sowie wenigstens einen Härter, optional zusätzlich wenigstens ein Epoxydharz, verwendet werden.

In einer bevorzugten Ausführungsform wird unter dem Begriff "Epoxidharz", wie hierin verwendet, ein Prepolymer verstanden, das pro Molekül zwei oder mehr Epoxygruppen aufweist. Die Reaktion dieser Harze mit einer Reihe von Vernetzern, auch als Härter bezeichnet, führt zu vernetzten Polymeren. Diese Polymere können duroplastisch sein und können in den Bereichen z. B. Civil Engineering (Bauwesen), besonders in Industrieböden, Abdichtungen und Betonsanierungsprodukten, Composites (Faserverbundwerkstoffe), Vergussmassen, Lacke und Klebstoffen, Verwendung finden. Ein Überblick über die Harze und Härter sowie deren Verwendung im Bereich Civil Engineering einschließlich ihrer Eigenschaften findet sich in H. Schuhmann, "Handbuch Betonschutz durch Beschichtungen", Expert Verlag 1992, Seite 396 - 428. Der Einsatz der Harze und Härter für den Bereich Composites wird in P. K. Mallick, "Fiber-Reinforced Composites, Materials, Manufacturing, and Design", CRC Press, Seite 60 - 76 beschrieben. Als Epoxidharz kommen erfindungsgemäß alle Epoxidharze in Frage, die mit Aminen gehärtet werden können. Zu den Epoxidharzen zählen z. B. Polyepoxide auf Basis von Bisphenol A-diglycidylether, Bisphenol F-diglycidylether oder cycloaliphatische Typen wie z. B. 3,4-Epoxycyclohexyl-epoxyethan oder 3,4-Epoxycyclohexylmethyl-3,4-epoxy-cyclohexancarboxylat. Vorzugsweise wird in der erfindungsgemäßen Zusammensetzung wenigstens ein Epoxidharz eingesetzt, das aus der Gruppe auswählt ist, die Epoxidharze auf Basis von Bisphenol A-diglycidylether, Epoxidharze auf Basis von Bisphenol F-diglycidylether und cycloaliphatische Typen wie z. B. 3,4-Epoxycyclohexyl-epoxyethan oder 3,4-Epoxycyclohexylmethyl-3,4-epoxy-cyclohexan-carboxylat umfasst, wobei Bisphenol A basierte Epoxidharze und Bisphenol F basierte Epoxidharze besonders bevorzugt sind. Derartige Verbindungen sind im Handel erhältlich. Die härtbare Zusammensetzung kann erfindungsgemäß mehr als ein Epoxidharz aufweisen, d. h. mehr als eine Verbindung mit Epoxygruppen ist anwesend.

Als Härter kommen sämtliche im Stand der Technik für härtbare Zusammensetzungen umfassend wenigstens eine Epoxyverbindung beschriebene Härter in Frage, insbesondere aminhaltige Härter, die mindestens zwei oder mehr primäre und/oder sekundäre Aminogruppen aufweisen, z. B. Diethylentriamin, Triethylentetramin, Methylendianilin, Bis(aminocyclohexyl)methan, 3,3'-Dimethyl-4,4'-diaminodicyclohexyl-methan, Tricyclododecandiamin, Norbornandiamin, N-Aminoethylpiperazin, Isophorondiamin, m-Phenylenbis(methylamin), 1,3- und/oder 1,4-Bis(aminomethyl)cyclohexan, Trimethylhexamethylendiamin, Polyoxyalkylenamine, Polyaminoamide, und Umsetzungsprodukte von Aminen mit Acrylnitril und Mannichbasen, weiterhin ein Polyamin ausgewählt aus der Gruppe enthaltend Isophorondiamin, Diethylentriamin, Trimethylhexamethylen-diamin, m-Phenylenbis(methylamin), 1,3-Bis(aminomethyl)-cyclohexan, Methylen-bis(4-aminocyclohexan), 3,3'-Dimethyl-4,4'-diaminodicyclohexyl-methan, N-Aminoethyl-piperazin, Polyoxyalkylenamine, Polyaminoamide, Umsetzungsprodukte von Aminen mit Acrylnitril und Mannichbasen.

In einer weiteren bevorzugten Ausführungsform wird als Härter eine Verbindung mit wenigstens einer Anhydridgruppe verwendet, bevorzugt ein Di- oder Polycarbonsäureanhydrid. Beispielhafte Verbindungen umfassen Trimellitsäureanhydrid-Addukte und Hexahydrophthalsäureanhydrid oder Methyl-Hexahydrophthalsäureanhydrid.

Neben dem Polybutadien mit Epoxygruppen, dem Härter, optional dem Epoxidharz kann die erfindungsgemäße Zusammensetzung weitere Verbindungen umfassen, insbesondere ein Lösungsmittel, z. B. Xylol oder iso-Propanol, wenigstens einen Reaktionsbeschleuniger, bevorzugt aus der Gruppe organischer Säuren oder tertiärer Amine, z. B. Salicylsäure, Aminoethylpiperazin, Tris-(N,N-dimethylaminomethyl)-phenol, weiterhin Pigmente, Füllstoffe und/oder Additive, einen Reaktivverdünner, der bevorzugt aus der Gruppe mono-, bi- oder polyfunktioneller, bei Raumtemperatur flüssiger Epoxidverbindungen ausgewählt ist, z. B. Butylglycidether, 1,6-Hexan- und 1,4-Butandiglycidether, Neopentyldiglycidether, Phenylglycidether, Glycidether der Versatic-Säure, C12-C14-Glycidether, C13-C15-Glycidether, p-tert-Butyl-Phenylglycidether, Neopentyl-glykoldiglycidether, Polybutylendiglycidether, Glycerintriglycidether, Pentaerythritpoly-glycidether, Trimethylolpropantriglycidether und Kresylglycidether, schließlich ein Modifizierungsmittel wie Benzylalkohol, Cumaron-Harz oder reaktive Kautschuke.

Die vorliegende Erfindung wird weiterhin durch die folgenden Figuren und nicht beschränkenden Beispiele veranschaulicht, denen weitere Merkmale, Ausführungsformen, Aspekte und Vorteile der vorliegenden Erfindung entnommen werden können.

### Beispiele:

Die Beispiele 1 bis 3 beschreiben die Synthese erfindungsgemäß verwendbarer Polybutadiene mit Epoxygruppen.

### Beispiel 1:

116,8 g (0,1 Mol OH-Äquivalent) Polyvest EP HT (Polybutadien mit Hydroxygruppen der Fa. Evonik Industries AG) gelöst in 83,2 g Toluol werden in einem mit Thermometer, Rührer, Rückflußkühler, Stickstoffüberleitung und Tropftrichter versehenen Sulfierkolben zusammen mit 0,19 g (0,001 Mol) SnCl2 vorgelegt. Dazu werden bei Raumtemperatur 10,18 g (0,11 Mol) Epichlorhydrin unter Rühren gegeben. Das Reaktionsgemisch wird 5 Stunden auf 100 °C Innentemperatur erhitzt. Nachdem Abkühlen auf 50 °C werden innerhalb von 30 Minuten 1,6 g (0,02 Mol) 50 Gew.-%ige wässrige NaOH-Lösung und 3,6 g (0,09 Mol) pulverisiertes NaOH portionsweise dazugegeben. Diese Mischung wird noch 1 Stunde bei 50 °C gerührt. Das Reaktionsgemisch wird filtriert. Die organische Phase wird über MgSO4 getrocknet, filtriert und vom Lösemittel im Vakuum abgetrennt. 112 g (91,5 % der Theorie) des nahezu farblosen Polybutadienglycidylethers mit einem Äquivalentgewicht von 1840 konnten isoliert werden. Das Produkt hat eine mit dem Rotationsviskosimeter ermittelte Viskosität von 14 Pa s bei 20 °C. Der ermittelte Tg-Wert ist - 78 °C. Die Mikrostruktur des eingesetzten Polybutadiens mit Hydroxygruppen bleibt erhalten (22 Mol-% 1,2-vinyl, 20 Mol-% 1,4-cis, 58 Mol-% 1,4-trans).

### Beispiel 2:

58,4 g (0,1 Mol OH-Äquivalent) Poly bd R-20LM (Polybutadien mit Hydroxygruppen der Fa. Cray Valley) gelöst in 41,6 g Toluol werden in einem mit Thermometer, Rührer, Rückflusskühler, Stickstoffüberleitung und Tropftrichter versehenen Sulfierkolben zusammen mit 0,19 g (0,001 Mol) SnCl2 vorgelegt. Dazu werden bei Raumtemperatur 10,18 g (0,11 Mol) Epichlorhydrin unter Rühren gegeben. Das Reaktionsgemisch wird 5 Stunden auf 100 °C Innentemperatur erhitzt. Nachdem Abkühlen auf 50 °C werden innerhalb von 30 Minuten 1,6 g (0,02 Mol) 50 Gew.-%ige wässrige NaOH-Lösung und 3,6 g (0,09 Mol) pulverisiertes NaOH portionsweise dazugegeben. Diese Mischung wird noch 1 Stunde bei 50 °C gerührt. Das Reaktionsgemisch wird filtriert. Die organische Phase wird über MgSO4 getrocknet, erneut filtriert und vom Lösemittel im Vakuum abgetrennt. 56,3 g (87,9 % der Theorie) des nahezu farblosen Polybutadienglycidylethers mit einem Äquivalentgewicht von 1010 konnten isoliert werden. Das Produkt hat eine mit dem Rotationsviskosimeter ermittelte Viskosität von 4,2 Pa s bei 20 °C. Der ermittelte Tg-Wert ist -71 °C. Die Mikrostruktur des eingesetzten Polybutadiens mit Hydroxygruppen bleibt erhalten (22 Mol-% 1,2-vinyl, 20 Mol-% 1,4-cis, 58 Mol-% 1,4-trans)

### Beispiel 3

58,4 g (0,1 Mol OH-Äquivalent) Poly bd R-20LM (Polybutadien mit Hydroxygruppen der Fa. Cray Valley) gelöst in 41,6 g Toluol werden in einem mit Thermometer, Rührer, Rückflusskühler, Stickstoffüberleitung und Tropftrichter versehenen Sulfierkolben zusammen mit 0,19 g (0,001 Mol) SnCl2 vorgelegt. Dazu werden bei Raumtemperatur 10,18 g (0,11 Mol) Epichlorhydrin unter Rühren gegeben. Das Reaktionsgemisch wird 5 Stunden auf 100 °C Innentemperatur erhitzt. Nachdem Abkühlen auf 50 °C werden innerhalb von 30 Minuten 1,6 g (0,02 Mol) 50 Gew.-%ige wässrige NaOH-Lösung und 3,6 g (0,09 Mol) pulverisiertes NaOH portionsweise dazugegeben. Diese Mischung wird noch 1 Stunde bei 50 °C gerührt und mit 50 g Toluol versetzt. Durch azeotrope Destillation wird Wasser aus dem Reaktionsgemisch entfernt. Das Reaktionsgemisch wird über MgSO4 filtriert und vom Lösemittel im Vakuum befreit. 58,9 g (92,0 % der Theorie) des nahezu farblosen Polybutadienglycidylethers mit einem Äquivalentgewicht von 1005 konnten isoliert werden. Das Produkt hat eine mit dem Rotationsviskosimeter ermittelte Viskosität von 4 Pa s bei 20 °C. Der ermittelte Tg-Wert ist -71 °C. Die Mikrostruktur des eingesetzten Polybutadiens mit Hydroxygruppen bleibt erhalten (22 Mol-% 1,2-vinyl, 20 Mol-% 1,4-cis, 58 Mol-% 1,4-trans).

## Patentansprüche

1. Verwendung von Polybutadien mit Epoxygruppen in einer härtbaren Zusammensetzung umfassend wenigstens ein Epoxidharz und wenigstens einen Härter,
wobei das Polybutadien die aus 1,3-Butadien abgeleiteten Monomereinheiten 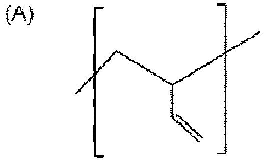 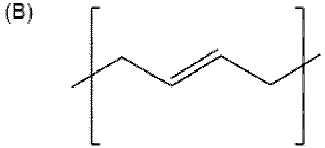 und 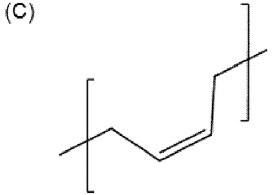 umfasst,
wobei der Anteil von A an der Gesamtheit der im Polybutadien enthaltenen aus 1,3-Butadien abgeleiteten Monomereinheiten 10 bis 60 Mol-% beträgt,
und wobei die Summe der Anteile von B und C an der Gesamtheit der im Polybutadien enthaltenen aus 1,3-Butadien abgeleiteten Monomereinheiten 40 bis 90 Mol-% beträgt, und wobei die Epoxygruppen die Formel (I) 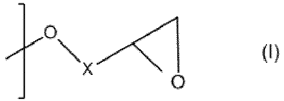 aufweisen und X eine lineare oder verzweigte Alkylengruppe darstellt.

2. Verwendung nach Anspruch 1, wobei der Anteil von A, B und C an der Gesamtheit der im Polybutadien enthaltenen aus 1,3-Butadien abgeleiteten Monomereinheiten jeweils und unabhängig voneinander wenigstens 10 % beträgt.

3. Verwendung nach einem der Ansprüche 1 bis 2, wobei der Anteil von A an der Gesamtheit der im Polybutadien enthaltenen aus 1,3-Butadien abgeleiteten Monomereinheiten 15 bis 30, der Anteil von B an der Gesamtheit der im Polybutadien enthaltenen aus 1,3-Butadien abgeleiteten Monomereinheiten 50 bis 70 und der Anteil von C an der Gesamtheit der im Polybutadien enthaltenen aus 1,3-Butadien abgeleiteten Monomereinheiten 15 bis 30 Mol-% beträgt.

4. Verwendung nach einem der Ansprüche 1 bis 3, wobei das Polybutadien 1,5 bis 3, bevorzugt 1,75 bis 2,5 Epoxygruppen aufweist.

5. Verwendung nach einem der Ansprüche 1 bis 4, wobei es sich bei der härtbaren Zusammensetzung um eine härtbare Zusammensetzung in Kleb-, Dicht- und Akustikmassen für Automobilanwendungen, Gießharzformulierungen für Elektroisolation, Dichtmassen für Baustoffe, zur Imprägnierung oder Verklebung von Metall, Glas- und Kohlefasergewebe handelt.

6. Verwendung nach einem der Ansprüche 1 bis 5, wobei das Epoxidharz aus der Gruppe umfassend Epoxidharze auf der Basis von Bisphenol A-diglycidylether, Bisphenol F-diglycidylether, kettenverlängerte Bisphenol-A-Harze mit Molmassen von 700 bis 5000, epoxidierte Novolake, Triglycidyl-p-aminophenol, Tetraglycidyl-methylendianilin und Hexahydrophthalsäure-diglycidylester und cycloaliphatische Typen ausgewählt ist.

7. Verwendung nach einem der Ansprüche 1 bis 6, wobei es sich bei dem wenigstens einen Härter um einen Härter handelt, der aus der Gruppe ausgewählt ist, die aminhaltige Härter mit mindestens zwei oder mehr primären und/oder sekundären Aminogruppen, Di- und Polycarbonsäureanhydriden umfasst.

8. Verwendung nach einem der Ansprüche 1 bis 6, wobei der Härter aus der Gruppe ausgewählt ist, die substituierte Harnstoffe, Guanamine, Guanidine und Imidazole umfasst.

9. Verwendung nach Anspruch 8, wobei es sich bei dem Härter um Dicyandiamid handelt.

10. Verwendung nach Anspruch 7, wobei es sich bei dem wenigstens einen Härter um ein Polyamin handelt.

11. Verwendung nach einem der Ansprüche 1 bis 10, wobei die härtbare Zusammensetzung wenigstens eine weitere Verbindung aus der Gruppe umfassend Lösungsmittel, Reaktionsbeschleuniger, Pigmente, Füllstoffe, Additive, Reaktivverdünner und Modifizierungsmittel umfasst.

## Claims

1. Use of polybutadiene with epoxy groups in a curable composition comprising at least one epoxy resin and at least one curing agent,
in which the polybutadiene comprises the monomer units 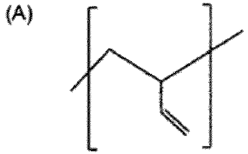 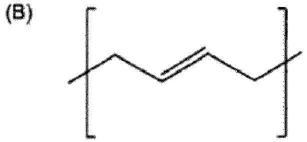 and 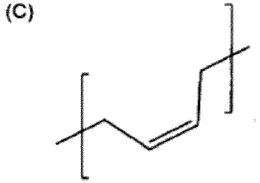 derived from 1,3-butadiene,
in which the proportion of A to the totality of the monomer units derived from 1,3-butadiene present in the polybutadiene is from 10 to 60 mol%,
and in which the sum of proportions of B and C to the totality of monomer units derived from 1,3-butadiene present in the polybutadiene is from 40 to 90 mol%,
and in which the epoxy groups exhibit the formula (I) 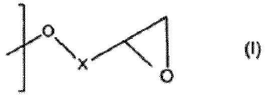 and X represents a linear or branched alkylene group.

2. Use according to Claim 1, in which the proportion of A, B and C to the totality of the monomer units derived from 1,3-butadiene present in the polybutadiene is in each case and independently of one another at least 10%.

3. Use according to either of Claims 1 and 2, in which a proportion of A to the totality of the monomer units derived from 1,3-butadiene present in the polybutadiene is from 15 to 30 mol%, the proportion of B to the totality of the monomer units derived from 1,3-butadiene present in the polybutadiene is from 50 to 70 mol% and the proportion of C to the totality of the monomer units derived from 1,3-butadiene present in the polybutadiene is from 15 to 30 mol%.

4. Use according to one of Claims 1 to 3, in which the polybutadiene exhibits 1.5 to 3, preferably 1.75 to 2.5, epoxy groups.

5. Use according to one of Claims 1 to 4, in which the curable composition is a curable composition in adhesive, sealing and acoustic compositions for automobile applications, casting resin formulations for electrical insulation, sealing compositions for construction materials, or for the impregnation or adhesive bonding of metal, glass fabrics and carbon fibre fabrics.

6. Use according to one of Claims 1 to 5, in which the epoxy resin is chosen from the group consisting of epoxy resins based on bisphenol A diglycidyl ether, bisphenol F diglycidyl ether, chain-extended bisphenol A resins with molar masses of 700 to 5000, epoxidized novolak resins, triglycidyl-p-aminophenol, tetraglycidylmethylenedianiline and diglycidyl hexahydrophthalate and cycloaliphatic types.

7. Use according to one of Claims 1 to 6, in which the at least one curing agent is a curing agent which is chosen from the group which consists of amine-comprising curing agents with at least two or more primary and/or secondary amino groups, di- and polycarboxylic anhydrides.

8. Use according to one of Claims 1 to 6, in which the curing agent is chosen from the group which consists of substituted ureas, guanamines, guanidines and imidazoles.

9. Use according to Claim 8, in which the curing agent is dicyandiamide.

10. Use according to Claim 7, in which the at least one curing agent is a polyamine.

11. Use according to one of Claims 1 to 10, in which the curable composition comprises at least one additional compound from the group consisting of solvents, reaction accelerators, pigments, fillers, additives, reactive diluents and modifying agents.

## Revendications

1. Utilisation de polybutadiène contenant des groupes époxy dans une composition durcissable comprenant au moins une résine époxyde et au moins un durcisseur,
le polybutadiène comprenant les unités monomères dérivées de 1,3-butadiène 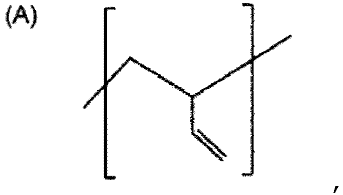 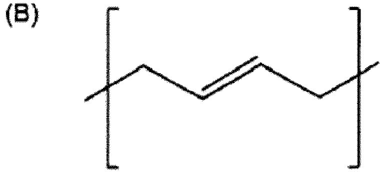 et 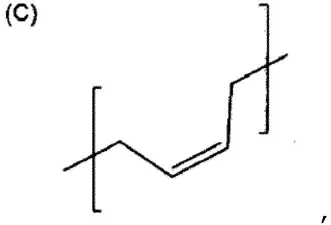 la proportion de A par rapport à la totalité des unités monomères dérivées de 1,3-butadiène contenues dans le polybutadiène étant de 10 à 60 % en moles,
et la somme des proportions de B et C par rapport à la totalité des unités monomères dérivées de 1,3-butadiène contenues dans le polybutadiène étant de 40 à 90 % en moles,
et les groupes époxy présentant la formule (I) 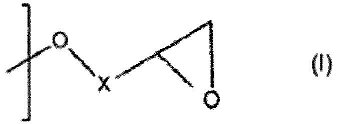 et X représentant un groupe alkylène linéaire ou ramifié.

2. Utilisation selon la revendication 1, dans laquelle les proportions de A, B et C par rapport à la totalité des unités monomères dérivées de 1,3-butadiène contenues dans le polybutadiène sont chacune et indépendamment les unes des autres d'au moins 10 %.

3. Utilisation selon l'une quelconque des revendications 1 à 2, dans laquelle la proportion de A par rapport à la totalité des unités monomères dérivées de 1,3-butadiène contenues dans le polybutadiène est de 15 à 30, la proportion de B par rapport à la totalité des unités monomères dérivées de 1,3-butadiène contenues dans le polybutadiène est de 50 à 70, et la proportion de C par rapport à la totalité des unités monomères dérivées de 1,3-butadiène contenues dans le polybutadiène est de 15 à 30 % en moles.

4. Utilisation selon l'une quelconque des revendications 1 à 3, dans laquelle le polybutadiène comprend 1,5 à 3, de préférence 1,75 à 2,5 groupes époxy.

5. Utilisation selon l'une quelconque des revendications 1 à 4, dans laquelle la composition durcissable est une composition durcissable dans des masses adhésives, d'étanchéité et acoustiques pour des applications automobiles, des formulations de résines à couler pour l'isolation électrique, des masses d'étanchéité pour matériaux de construction, pour l'imprégnation ou le collage de métaux, de tissus en fibres de verre et de carbone.

6. Utilisation selon l'une quelconque des revendications 1 à 5, dans laquelle la résine époxyde est choisie dans le groupe comprenant les résines époxydes à base d'éther diglycidylique de bisphénol A, d'éther diglycidylique de bisphénol F, les résines de bisphénol A à chaîne allongée ayant des masses molaires de 700 à 5000, les novolaques époxydées, le triglycidyl-p-aminophénol, la tétraglycidyl-méthylène-dianiline et l'ester diglycidylique de l'acide hexahydrophtalique et les types cycloaliphatiques.

7. Utilisation selon l'une quelconque des revendications 1 à 6, dans laquelle ledit au moins un durcisseur est un durcisseur qui est choisi dans le groupe comprenant les durcisseurs aminés contenant au moins deux groupes amino primaires et/ou secondaires ou plus, les anhydrides d'acides di- et polycarboxyliques.

8. Utilisation selon l'une quelconque des revendications 1 à 6, dans laquelle le durcisseur est choisi dans le groupe comprenant les urées substituées, les guanamines, les guanidines et les imidazoles.

9. Utilisation selon la revendication 8, dans laquelle le durcisseur est le dicyandiamide.

10. Utilisation selon la revendication 7, dans laquelle ledit au moins un durcisseur est une polyamine.

11. Utilisation selon l'une quelconque des revendications 1 à 10, dans laquelle la composition durcissable comprend au moins un composé supplémentaire du groupe comprenant les solvants, les accélérateurs de réaction, les pigments, les charges, les additifs, les diluants réactifs et les modificateurs.
